Europäisches Patentamt

European Patent Office

Office européen des brevets

(11) Veröffentlichungsnummer: **0 680 995 A1**

# EUROPÄISCHE PATENTANMELDUNG

(21) Anmeldenummer: **95104473.4**

(22) Anmeldetag: **27.03.95**

(51) Int. Cl.⁶: **C08K 3/04**, C08K 5/01

(30) Priorität: **06.04.94 DE 4411756**

(43) Veröffentlichungstag der Anmeldung:
**08.11.95 Patentblatt 95/45**

(84) Benannte Vertragsstaaten:
**DE IE NL**

(71) Anmelder: **HOECHST AKTIENGESELLSCHAFT**
**Brüningstrasse 50**
**D-65929 Frankfurt am Main (DE)**

(72) Erfinder: **Jung, Holger, Dr.**
**Feldbergblick 8**
**D-65527 Niedernhausen (DE)**
Erfinder: **Klein, Peter, Dr.**
**Fasanenweg 13**
**D-65205 Wiesbaden (DE)**
Erfinder: **Bruckner, Werner, Dr.**
**Fuchstanzstrasse 6**
**D-65830 Kriftel (DE)**
Erfinder: **Idzko, Jürgen, Dr.**
**Grenzstrasse 12**
**D-86399 Bobingen (DE)**

(54) **Zusammensetzungen enthaltend aromatische Polyamide und Fullerene, geformte Gebilde daraus sowie deren Verwendung.**

(57) Beschrieben werden Zusammensetzungen enthaltend aromatische Polyamide und Fullerene. Die Zusammensetzungen zeichnen sich durch eine hohe Stabilität gegenüber elektromagnetischer Bestrahlung aus.

EP 0 680 995 A1

Die vorliegende Erfindung betrifft Zusammensetzungen enthaltend aromatische Polyamide und Fullerene, Verfahren zur Herstellung dieser Zusammensetzungen, geformte Gebilde daraus sowie deren Verwendung, insbesondere in Anwendungsbereichen, in denen hohe UV-Stabilität gefragt sind.

Aromatische Polyamide (Aramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Neben derartigen aromatischen Polyamiden, die infolge ihrer Unlöslichkeit in polaren organischen Lösungsmitteln schwierig herzustellen und zu verarbeiten sind, wurden Copolyamide entwickelt, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen. Beispiele für derartige aromatische Copolyamide finden sich in der DE-PS-2,556,883, in der DE-A-3,007,063, und in den EP-A-199,090, EP-A-364,891, EP-A-364,892, EP-A-364,893 und EP-A-424,860 beschrieben.

Ferner sind aromatische Polyamide bekannt, die sich hauptsächlich von meta-Monmeren ableiten und die in polaren organischen Lösungsmitteln löslich und aus diesen verarbeitbar sind. Ein Vertreter dieses Typs ist Poly-(m-phenylenisophthalamid).

In neuerer Zeit wurden Fullerene als weitere Modifikation des Kohlenstoffs bekannt und beschrieben. In der jüngeren Vergangenheit sind zahlreiche Fachartikel erschienen, worin mögliche Anwendungen vorgeschlagen und diskutiert wurden, beispielsweise in Hoechst High Chem Magazin 14, S. 49-54 (1993) oder in Accounts of Chemical Research, 26 (3), 98-175 (1992).

Es ist auch bereits vorgeschlagen worden, Fullerene mit Polymeren zu kombinieren. So beschreibt z.B. die DE-A-4,207,246 abriebarme thermoplastische Formmassen enthaltend ein thermoplastisches Polymeres und ein Fulleren. Es werden unterschiedliche Polymere aufgezählt, unter anderem auch Polyamide, welche von aliphatischen oder cylcoaliphatischen Diaminen und aromatischen Dicarbonsäuren abgeleitet sind. Aramide sind in dieser Schrift nicht erwähnt.

Aus der EP-A-544,513 sind Polymerzusammensetzungen bekannt, die einen derartigen Gehalt an Fullerenen aufweisen, daß die viscoelastischen Eigenschaften des Polymeren modifziert werden. Die Beschreibung enthält eine umfangreiche Liste von möglichen Polymeren, unter anderem auch Polyamide. Aramide sind in dieser Schrift ebenfalls nicht erwähnt.

Ferner ist bereits bekannt, Fullerene in Monofilamenten einzusetzen. In der WO-A-93-14,251 werden Monofilamente aus Kunststoffen beschrieben, welche ein Gleitmittel enthalten, das darüber hinaus die Benetzbarkeit der Faser modifiziert. In der Beschreibung findet sich ein Hinweis auf den Einsatz von Polyamiden, welche von aliphatischen Diaminen und aromatischen Dicarbonsäuren bzw. von aliphatischen Aminocarbonsäuren abgeleitet sind. Auch in dieser Schrift sind Aramide nicht erwähnt.

Aus der US-A-5,276,085 ist ein Verfahren zur Herstellung von Fasern mit verbessertem Torsionsmodul bekannt, bei dem aromatische Polyamide und Fullerene zum Einsatz kommen. Als bevorzugte aromatische Polyamide werden dort Poly-(p-phenylenterephthalamid) und Poly-(m-phenylenisophthalamid) genannt.

Es wurde jetzt gefunden, daß Zusammensetzungen enthaltend aromatische Polyamide und Fullerene sich überraschenderweise durch eine ausgezeichnete Beständigkeit gegenüber UV-Strahlung auszeichnen. Die erfindungsgemäß einzusetzenden Zusammensetzungen lassen sich insbesondere zu geformten Gebilden mit ausgezeichneten Eigenschaften, insbesondere außerordentlich hohen Anfangsmoduli und Zugfestigkeiten, verarbeiten.

Die vorliegende Erfindung betrifft die Verwendung von Fullerenen zur Stabilisierung von aromatischen Polyamiden gegenüber Abbau durch elektromagnetische Strahlung, insbesondere durch UV-Bestrahlung.

Die erfindungsgemäß einzusetzende Zusammensetzung kann aus beliebigen Aramiden bestehen. Dabei kann es sich um Aramide handeln, die im wesentlichen aus meta-aromatischen Monomeren aufgebaut sind. Ein bevorzugtes Beispiel für Verbindungen dieses Typs ist Poly-(meta-phenylenisophthalamid).

Bei den in den erfindungsgemäß einzusetzenden Zusammensetzungen enthaltenen Polymeren handelt es sich vorzugsweise um Aramide, die zu einem wesentlichen Anteil para-aromatischen Monomeren aufgebaut sind. Einige dieser Aramide sind in organischen Lösungsmitteln nicht löslich und werden daher üblicherweise aus Schwefelsäure versponnen. Ein bevorzugtes Beispiel für Verbindungen dieses Typs ist

EP 0 680 995 A1

Poly-(para-phenylen-terephthalamid).

Eine weitere bevorzugte Gruppe von Aramiden, die zu einem wesentlichen Anteil para-aromatischen Monomeren aufgebaut sind, ist in organischen Lösungsmitteln, insbesondere in polaren aprotischen Lösungsmitteln, löslich.

Unter löslichem aromatischen Polyamid ist im Rahmen dieser Erfindung ein aromatisches Polyamid zu verstehen, daß bei 25°C eine Löslichkeit in N-Methylpyrrolidon von mindestens 40 g/l aufweist.

Vorzugsweise enthält das polare aprotische organische Lösungsmittel zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen.

Bevorzugt setzt man aromatische Polyamide ein, die in polaren aprotischen organischen Lösungsmitteln unter der Ausbildung isotroper Lösungen löslich sind und die mindestens zwei, insbesondere drei verschiedene sich in den Diamineinheiten unterscheidende wiederkehrende Struktureinheiten aufweisen.

Zusammensetzungen enthaltend diese aromatischen Polyamide und Fullerene sind ebenfalls Gegenstand der vorliegenden Erfindung.

Dabei handelt es sich insbesondere um Polymere, die die wiederkehrenden Struktureinheiten der Formeln I, II und gegebenenfalls III enthalten

$-OC-Ar^1-CO-NH-Ar^2-NH-$ (I),

$-OC-Ar^1-CO-NH-Ar^3-NH-$ (II),

$-OC-Ar^1-CO-NH-Ar^4-NH-$ (III),

worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und $Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, -CH₂-, -S-,-CO- oder -SO₂- miteinander verbunden sein.

3

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet aromatische Polyamide auf der Basis von unsubstituierten Resten.

Als Dicarbonsäureeinheit in den aromatischen Polyamiden enthaltend die wiederkehrenden Struktureinheiten der Formeln I, II und gegebenenfalls III setzt man vorzugsweise Terephthalsäureeinheiten ein.

Beispiele für bevorzugte Diaminkombinationen, die diesen bevorzugten wiederkehrenden Struktureinheiten der Formeln I, II und gegebenenfalls III zugrundeliegen, sind 1,4-Phenylendiamin und 3,4'-Diaminodiphenylether; 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether.

Aramide, die sich von solchen Diaminkombinationen ableiten und die sich bevorzugt gemäß der vorliegenden Erfindung einsetzen lassen, sind in den EP-A-199,090, EP-A-364,891, EP-A-364,892, EP-A-364,893 und EP-A-424,860 beschrieben.

Die erfindungsgemäß einzusetzenden aromatischen Polyamide sind an sich bekannt.

In den bevorzugten Zusammensetzungen werden besonders solche aromatischen Copolyamide bevorzugt, worin $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden,

$Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$$-Ar^5-X-Ar^6-\quad\text{(IV)},$$

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,

X eine Gruppe der Formel -O-, -S-, $-SO_2-$, -O-Phenylen-O- oder Alkylen ist, und worin

$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

Besonders bevorzugt werden Zusammensetzungen enthaltend aromatische Copolyamide mit den wiederkehrenden Struktureinheiten der Formeln I, II und III, worin $Ar^1$ 1,4-Phenylen ist, $Ar^2$ 1,4-Phenylen

oder ein zweiwertiger Rest des 4,4'-Diaminobenzanilids ist, Ar[5] und Ar[6] 1,4-Phenylen darstellen, X -O-, -CH$_2$-oder -O-1,4-Phenylen-O- ist und Ar[4] einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

Ganz besonders bevorzugt werden Zusammensetzungen enthaltend aromatische Copolyamide mit den wiederkehrenden Struktureinheiten der Formeln I, II und III, worin Ar[1] und Ar[2] 1,4-Phenylen sind, Ar[5] und Ar[6] 1,4-Phenylen darstellen, X -O-1,4-Phenylen-O- ist und Ar[4] einen zweiwertigen Rest des 3,4'-Diaminodiphenylethers, darstellt, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 40-60 Mol%,
wiederkehrende Struktureinheit der Formel II: 1-20 Mol%, und
wiederkehrende Struktureinheit der Formel III: 15-40 Mol%.

Ganz besonders bevorzugt werden Zusammensetzungen enthaltend aromatische Copolyamide mit den wiederkehrenden Struktureinheiten der Formeln I, II und III, worin Ar[1] und Ar[2] 1,4-Phenylen sind, Ar[5] und Ar[6] 1,4-Phenylen darstellen, X -O-1 ,4-Phenylen-O- ist und Ar[4] einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 10-30 Mol%,
wiederkehrende Struktureinheit der Formel II: 10-30 Mol%, und
wiederkehrende Struktureinheit der Formel III: 30-70 Mol%.

Ganz besonders bevorzugt werden Zusammensetzungen enthaltend aromatische Copolyamide mit den wiederkehrenden Struktureinheiten der Formeln I, II und III, worin Ar[1] und Ar[2] 1,4-Phenylen sind, Ar[3] einen zweiwertigen Rest des 3,4'-Diaminodiphenylethers darstellt, und Ar[4] einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 10-40 Mol%,
wiederkehrende Struktureinheit der Formel II: 10-40 Mol%, und
wiederkehrende Struktureinheit der Formel III: 20-70 Mol%.

Ganz besonders bevorzugt werden Zusammensetzungen enthaltend aromatische Copolyamide mit den wiederkehrenden Struktureinheiten der Formeln I und II, worin Ar[1] 1,4-Phenylen ist, Ar[2] 1,4-Phenylen oder ein zweiwertiger Rest des 4,4'-Diaminobenzanilids ist, und Ar[3] einen zweiwertigen Rest des 3,4'-Diaminodiphenylethers bedeuten, worin die Mengenanteile der wiederkehrenden Struktureinheiten der Formeln I und II sich innerhalb folgender Bereiche, bezogen auf die Gesamtmenge dieser Struktureinheiten bewegen:
wiederkehrende Struktureinheit der Formel I: 20-60 Mol%, und
wiederkehrende Struktureinheit der Formel II: 40-60 Mol%.

Die Polykondensation der erfindungsgemäß einzusetzenden aromatischen Polyamide wird im allgemeinen als Lösungspolykondensation von aromatischen Dicarbonsäuredihalogeniden, vorzugsweise aromatischen Dicarbonsäuredichloriden, mit aromatischen Diaminen ausgeführt. Zur Herstellung der erfindungsgemäßen Zusammensetzungen wird das Fulleren in der Regel bei der Polykondensation den Monomeren zugesetzt.

Die Reaktionsmischung wird vor der Polykondensation zweckmäßigerweise durch geeignete Trennoperationen von ungelösten Fullerenen befreit, beispielsweise durch Filtration der Lösung.

Zur Herstellung der bevorzugten Zusammensetzungen enthaltend aromatische Polyamide mit den oben definierten wiederkehrenden Struktureinheiten der Formeln I, II und gegebenenfalls III setzt man zweckmäßigerweise ein Dicarbonsäuredichlorid der Formel V oder eine Mischung derartiger Dicarbonsäuredichloride mit einem Gemisch der Diamine der Formeln VI, VII und gegebenenfalls VIII um

ClOC-Ar[1]-COCl (V), H$_2$N-Ar[2]-NH$_2$ (VI),

H$_2$N-Ar[3]-NH$_2$ (VII), H$_2$N-Ar[4]-NH$_2$ (VIII),

wobei dem Dicarbonsäuredichlorid der Formel V und/oder dem Gemisch der Diamine der Formel VI, VII und gegebenenfalls VIII ein Fulleren oder ein Gemisch von Fullerenen zugesetzt wurde.

In den obigen Formeln V bis VIII besitzen Ar[1] bis Ar[4] die weiter oben definierte Bedeutung.

Die Mengenverhältnisse der Diamine VI, VII und gegebenenfalls VIII sind dabei jeweils so zu wählen, daß dabei in organischen Lösungsmitteln lösliche Polyamide, insbesondere die Verbindungen mit den oben als bevorzugt definierten Mengenanteilen an Struktureinheiten der Formeln I bis II und gegebenenfalls III entstehen.

Es ist für den Fachmann selbstverständlich, daß die Summe aller von aromatischen Säuren abgeleiteten Struktureinheiten und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete aromatische Dicarbonsäuren, von denen sich die Dicarbonsäuredichloride der Formel V ableiten, sind Naphthalin-1,4-dicarbonsäure, Naphthalin-1,5-dicarbonsäure, Naphthalin-2,6-dicarbonsäure, Biphenyl-4,4'-dicarbonsäure, 2-Chlorterephthalsäure, 2-Bromterephthalsäure, 2-Methylterephthalsäure und insbesondere Terephthalsäure.

Als Diamin der Formel VI setzt man vorzugsweise p-Phenylendiamin ein.

Als Diamin der Formel VII setzt man vorzugsweise 1,4-Bis-(4-aminophenoxy)-benzol ein.

Beispiele für besonders geeignete Diamine der Formel VIII sind 3,4'-Diaminodiphenylether, 4,4'-Diaminobenzanilid, 3,4'-Diaminobenzanilid, 3,3-Dichlorbenzidin, 2-Chlor-p-phenylendiamin, 3,3'-Dimethylbenzidin, 3,3'-Dimethoxybenzidin und 3,3'-Dichlorbenzidin.

Zur Durchführung der Lösungspolykondensation werden die miteinander umzusetzenden aromatischen monomeren Verbindungen in einem Lösungsmittel, vorzugsweise einem organischen Lösungsmittel, gelöst. Das organische Lösungsmittel enthält dabei vorzugsweise zumindest ein Lösungsmittel vom Amidtyp, wie weiter oben beschrieben.

Für das erfindungsgemäße Verfahren sind die bevorzugten organischen Lösungsmittel N-Methyl-2-pyrrolidon, N,N-Dimethylacetamid und eine Mischung dieser Verbindungen von besonderer Bedeutung.

Bei einer bevorzugten Form der Durchführung der Lösungspolykondensation werden die aromatischen monomeren Diamine zusammen mit dem Fulleren bzw. der Fullerenfraktion in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Polykondensation einzuleiten.

Dabei wird das Amid-Lösungsmittel nicht nur als Lösungsmittel für die aromatischen monomeren Verbindungen und das daraus erhaltene aromatische Polyamid sondern auch als Säureakzeptor für ein Wasserstoffhalogenid verwendet, z.B. für Chlorwasserstoff, der als Nebenprodukt der Polykondensation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Polykondensationsmischung vor, während oder nach der Polykondensation zugesetzt wird.

Beispiele für solche Zusatzstoffe sind Alkalimetallhalogenide, wie Lithiumchlorid oder Erdalkalimetallhalogenide, wie Calciumchlorid.

Die Polykondensationstemperaturen liegen bei der Lösungspolymerisation üblicherweise zwischen -20 °C und +120 °C, bevorzugt zwischen +10 °C und +100 °C. Besonders gute Ergebnisse werden bei Reaktionstemperaturen zwischen +10 °C und +80 °C erzielt.

Die Summe der Konzentrationen der aromatischen monomeren Verbindungen in der Polymerisationsgemischlösung kann unter Beachtung des gewünschten Polymerisationsgrades, der gewünschten Viskosität des Polymerisationsgemisches, der Art der verwendeten aromatischen monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 4 bis 20, vorzugsweise 5 bis 10 Gew.-% an Polykondensat in der Lösung vorliegen.

Im Verlauf der Polykondensation wächst das Molekulargewicht des Polymers und damit auch die Viskosität des Reaktionsansatzes an.

Eine ausreichende Molekül-Kettenlänge ist beispielsweise erreicht, wenn die Viskosität der bei der Polykondensation erhaltenen Polymerlösung einer inhärenten Viskosität des Polymers von mehr als 2,5 dl/g, vorzugsweise 2,5 bis 7,0 dl/g, entspricht.

Unter inhärenter Viskosität wird der Ausdruck

6

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung bestimmt an 0,25 %igen Lösungen von Polymer in N-Methylpyrrolidon bei 25°C.

Das skizzierte Verfahren zur Herstellung der erfindungsgemäßen Zusammensetzungen ist ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Polyamid kann aus dem Polymerisationsgemisch durch ein Trennverfahren abgeschieden werden, beispielsweise durch Präzipitation. Zur Herstellung einer Lösung für das Ausformen des Polyamids wird das so gewonnene aromatische Polyamid dann in einem geeigneten organischen Lösungsmittel gelöst, wobei dieses Verfahren als Auflösungsverfahren zur Herstellung der Ausformlösung bezeichnet wird.

In den erfindungsgemäß einzusetzenden Zusammensetzungen können beliebige Fullerene zum Einsatz kommen. Dabei handelt es sich um große aus Kohlenstoff bestehende Moleküle mit in sich geschlossener polyedrischer Struktur. Bei Fullerenen handelt es sich üblicherweise um käfigförmige Kohlenstoffallotrope der allgemeinen Formel $C_{20+2m}$, worin m 0 oder eine natürliche Zahl darstellt. Vorzugsweise enthalten diese zwölf Fünfringe sowie beliebige viele, mindestens aber zwei Sechsringe aus Kohlenstoffatomen und gegebenenfalls andere Polygone aus Kohlenstoffatomen.

Bevorzugte Fullerene bestehen aus $C_{60}$ bis $C_{70}$ Fraktionen.

Die Herstellung und Isolierung von Fullerenen ist an sich bekannt und beispielsweise in Phys. Bl. 48 (Nr. 7/8), S. 553-556 (1992) beschrieben.

Die erfindungsgemäß einzusetzenden Zusammensetzungen kommen besonders in Form von verschiedenen geformten Gebilden zum Einsatz, beispielsweise in Form von Beschichtungen und insbesondere Fasern und Filmen.

Der Begriff "Fasern" ist im Rahmen dieser Erfindung in seiner breitesten Bedeutung zu verstehen; dazu zählen also zum Beispiel Filamente oder Stapelfasern beliebiger Titer.

Der Begriff "Filme" ist im Rahmen dieser Erfindung ebenfalls in seiner breitesten Bedeutung zu verstehen; dazu zählen also zum Beispiel Ausführungsformen unterschiedlicher Stärke, wie Folien oder Membranen.

Diese geformten Gebilde besitzen nicht nur eine hervorragende Wärmebeständigkeit und chemische Beständigkeit, sondern weisen auch überlegene mechanische Eigenschaften auf, insbesondere hinsichtlich der Zugfestigkeit und des Elastizitätsmoduls. Insbesondere zeichnen sich die geformten Gebilde durch eine hohe Beständigkeit gegenüber UV-Bestrahlung aus.

Die Menge an Fullerenen in den erfindungsgemäß einzusetzenden Zusammensetzungen kann innerhalb weiter Grenzen variieren. In Abhängigkeit von der ins Auge gefaßten Anwendung können beispielsweise 0,001 bis 10 Gew. % Fulleren, bezogen auf die Masse an Aramid und Fulleren, eingesetzt werden. Für den Einsatz zur Stabilisierung gegen UV-Bestrahlung werden vorzugsweise 0,01 bis 5 Gew. %, insbesondere 0,1 bis 2 Gew. % Fulleren eingesetzt.

Die Herstellung der Aramidfasern oder Aramidfilme kann nach an sich bekannten Verfahren erfolgen. Verfahren zur Herstellung von Aramidfasern sind beispielsweise in den EP-A-199,090, EP-A-364,891, EP-A-364,862, EP-A-364,863 und EP-A-424,860 beschrieben.

Die erfindungsgemäß einzusetzenden geformten Gebilde, wie Filme oder Fasern, zeichnen sich durch ausgezeichnete mechanische Eigenschaften, wie hohe Reißfestigkeiten und Anfangsmoduli und niedrige Reißdehnungen, sowie durch die oben erwähnten günstigen Anwendungs- und Weiterverarbeitungseigenschaften aus.

Die erfindungsgemäß einzusetzenden Fasern weisen vorzugsweise Einzelfilamenttiter von größer gleich 1,0 dtex, insbesondere von 1 bis 20 dtex, auf.

Die Zugfestigkeit der erfindungsgemäß einzusetzenden Fasern beträgt vorzugsweise 140 bis 290 cN/tex.

Der Anfangsmodul, bezogen auf 100 % Dehnung, der erfindungsgemäß einzusetzenden Fasern beträgt vorzugsweise 40 bis 130 N/tex.

Die Querschnittsform der Einzelfilamente der erfindungsgemäß einzusetzenden Fasern kann beliebig sein, beispielsweise dreieckig, tri- oder multilobal oder insbesondere elliptisch oder rund.

Die Fasern oder Filme aus der erfindungsgemäß einzusetzenden Zusammensetzung, welche hervorragende mechanische und thermische Eigenschaften besitzen, können auf die verschiedenste Weise industriell verwendet werden, beispielsweise zur Verstärkung von Kunststoffen, insbesondere als Verstärkungsmaterialien für die Gewebeeinlagen von Gummiartikeln, als wärmebeständige elektrische Isolationsmaterialien, zur Herstellung von Filtergeweben und als leichte Dämmstoffe.

Filme aus der erfindungsgemäß einzusetzenden Zusammensetzung können als wärmebeständige elektrische Isolationsmaterialien oder zur Herstellung von Membranen eingesetzt werden.

Weitere Eigenschaften und Vorteile der Erfindung werden nachstehend anhand von Beispielen noch näher erläutert.

Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Beispiel 1 Herstellung einer Zusammensetzung enthaltend aromatisches Polyamid und Fulleren

47,58 g Para-Phenylendiamin, 61,66 g 3,4'-Diaminodiphenylether und 38,58 g 1,4-Bis-(4-aminophenyloxy)-benzol wurden in 4008 g N-Methylpyrrolidon aufgelöst. Unter leichter Erwärmung wurden zu der Diaminlösung 3 g Fulleren gegeben. Die Farbe der Lösung wurde sofort dunkelrot bis braun. Die Lösung wurde filtriert; der Rückstand bestand aus 1,5 g ungelöstem Fulleren.

Anschließend wurde die Lösung bei Temperaturen von 35 bis 55 °C mit 178,66 g Terephthalsäuredichlorid versetzt.

Beim Erreichen der gewünschten Viskosität von $\eta_{inh}$ = 5,5 dl/g (bei 25 °C) wurde die Polykondensation durch Zusatz von 1,43 g Acetylchorid abgestoppt und dann mit 68,6 g Calciumhydroxid neutralisert. Die Lösung wurde zwei Stunden nachgerührt.

Anschließend wurde filtriert, entgast und naß versponnen. Dazu wurde die Lösung aus einer Düse mit 100 Öffnungen von jeweils 0,1 mm Durchmesser in ein Koagulationsbad, bestehend aus einer 80 °C warmen Mischung aus 35 Gewichtsteilen NMP und 65 Gewichtsteilen Wasser mit einer Geschwindigkeit von 14 m/min ausgesponnen. Dei erhaltenen Fäden wurden durch Wasserbäder, eine Waschmaschine, über Trockengaletten und schließlich über Bügeleisen der Temperaturen von 400 bis 480 °C auf das 10-fache verstreckt.

Der Einzelfilamenttiter der so hergestellten Fasern betrug 1,72 dtex bei einer feinheitsbezogenen Festigkeit von 198 cN/tex, einer Reißdehnung von 4,2 % und einem Anfangsmodul von 46 N/tex, bezogen auf 100 % Dehnung.

Die Fasern wiesen eine deutlich dunklere Eigenfarbe auf, als die aus einem Vergleichsversuch gesponnene Faser ohne Fullerenzusatz.

Die Fasern mit Fullerenzusatz wiesen eine gegenüber einer Faser ohne Fullerenzusatz deutlich erhöhte UV-Beständigkeit auf. Dies ist in der folgenden Tabelle dargestellt. Die Messung der UV-Beständigkeit erfolgte durch Xenotest.

Tabelle

| Beispiel | 1a | 1b |
|---|---|---|
| Fasertype | ohne Fullerenzusatz | mit Fullerenzusatz |
| Zugfestigkeit nach 100 h Bestrahlung[1] | 31 | 67 ± 10 % |
| Zugfestigkeit nach 200 h Bestrahlung[1] | 17 | 50 ± 10 % |

[1] in %, bezogen auf die Zugfestigkeit der Faser vor der Bestrahlung

**Patentansprüche**

1. Verwendung von Fullerenen zur Stabilisierung von aromatischen Polyamiden gegenüber Abbau durch elektromagnetische Strahlung, insbesondere durch UV-Strahlung.

2. Verwendung nach Anspruch 1, dadurch gekennzeichnet, daß es sich bei dem aromatischen Polyamid um Poly-(meta-phenylen-isophthalamid) handelt.

3. Verwendung nach Anspruch 1, dadurch gekennzeichnet, daß es sich bei dem aromatischen Polyamid um Poly-(para-phenylen-terephthalamid) handelt.

4. Verwendung nach Anspruch 1, dadurch gekennzeichnet, daß es sich bei dem aromatischen Polyamid um ein Polymer handelt, das in polaren aprotischen organischen Lösungsmitteln unter der Ausbildung isotroper Lösungen löslich ist und das die wiederkehrenden Struktureinheiten der Formeln I, II und gegebenenfalls III enthält

    $-OC-Ar^1-CO-NH-Ar^2-NH-$    (I),

    $-OC-Ar^1-CO-NH-Ar^3-NH-$    (II),

    $-OC-Ar^1-CO-NH-Ar^4-NH-$    (III),

    worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
    $Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

5. Verwendung nach Anspruch 4, dadurch gekennzeichnet, daß $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

    $-Ar^5-X-Ar^6-$    (IV),

    worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
    X eine Gruppe der Formel -O-, -S-, $-SO_2-$, -O-Phenylen-O- oder Alkylen ist, und worin
    $Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

6. Verwendung nach Anspruch 5, dadurch gekennzeichnet, daß das aromatische Polyamid ein aromatisches Copolyamid mit den wiederkehrenden Struktureinheiten der Formeln I, II und III ist, worin $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, $-CH_2-$ oder -O-1,4-Phenylen-O- ist und $Ar^4$ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

7. Verwendung nach Anspruch 6, dadurch gekennzeichnet, daß $Ar^1$ und $Ar^2$ 1,4-Phenylen sind, $Ar^5$ und $Ar^6$ 1,4-Phenylen darstellen, X -O-1,4-Phenylen-O- ist und $Ar^4$ einen zweiwertigen Rest des 3,4'-Diaminodiphenylethers, darstellt, worin die Mengenanteile der wiederkehrenden Struktureinheiten der Formeln I bis III sich innerhalb folgender Bereiche, bezogen auf die Gesamtmenge dieser Struktureinheiten, bewegen:

wiederkehrende Struktureinheit der Formel I: 40-60 Mol%,

wiederkehrende Struktureinheit der Formel II: 1-20 Mol%, und

wiederkehrende Struktureinheit der Formel III: 15-40 Mol%.

8. Verwendung nach Anspruch 6, dadurch gekennzeichnet, daß $Ar^1$ und $Ar^2$ 1,4-Phenylen sind, $Ar^5$ und $Ar^6$ 1,4-Phenylen darstellen, X -O-1,4-Phenylen-O- ist und $Ar^4$ einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:

wiederkehrende Struktureinheit der Formel I: 10-30 Mol%,

wiederkehrende Struktureinheit der Formel II: 10-30 Mol%, und

wiederkehrende Struktureinheit der Formel III: 30-70 Mol%.

9. Verwendung nach Anspruch 4, dadurch gekennzeichnet, daß das aromatische Polyamid ein aromatisches Copolyamid mit den wiederkehrenden Struktureinheiten der Formeln I, II und III ist, worin $Ar^1$ und $Ar^2$ 1,4-Phenylen sind, $Ar^3$ einen zweiwertigen Rest des 3,4'-Diaminodiphenylethers darstellt, und $Ar^4$ einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:

wiederkehrende Struktureinheit der Formel I: 10-40 Mol%,

wiederkehrende Struktureinheit der Formel II: 10-40 Mol%, und

wiederkehrende Struktureinheit der Formel III: 20-70 Mol%.

10. Verwendung nach Anspruch 4, dadurch gekennzeichnet, daß das aromatische Polyamid ein aromatisches Copolyamid mit den wiederkehrenden Struktureinheiten der Formeln I und II ist, worin $Ar^1$ 1,4-Phenylen ist, $Ar^2$ 1,4-Phenylen oder ein zweiwertiger Rest des 4,4'-Diaminobenzanilids ist, und $Ar^3$ einen zweiwertigen Rest des 3,4'-Diaminodiphenylethers bedeuten, worin die Mengenanteile der wiederkehrenden Struktureinheiten der Formeln I und II sich innerhalb folgender Bereiche, bezogen auf die Gesamtmenge dieser Struktureinheiten bewegen:

wiederkehrende Struktureinheit der Formel I: 20-60 Mol%, und

wiederkehrende Struktureinheit der Formel II: 40-60 Mol%.

11. Verwendung nach Anspruch 1, dadurch gekennzeichnet, daß die Fullerene aus $C_{60}$ bis $C_{70}$ Fraktionen bestehen.

12. Verwendung nach Anspruch 1, dadurch gekennzeichnet, daß das aromatische Polyamid 0,01 bis 5 Gew.% Fullerene enthält.

13. Zusammensetzungen enthaltend aromatische Polyamide und Fullerene, dadurch gekennzeichnet, daß es sich bei dem aromatischen Polyamid um ein Polymer handelt, das in polaren aprotischen organischen Lösungsmitteln unter der Ausbildung isotroper Lösungen löslich ist und das die wiederkehrenden Struktureinheiten der Formeln I, II und gegebenenfalls III enthält

-OC-$Ar^1$-CO-NH-$Ar^2$-NH-    (I),

-OC-$Ar^1$-CO-NH-$Ar^3$-NH-    (II),

-OC-$Ar^1$-CO-NH-$Ar^4$-NH-    (III),

worin $Ar^1$, $Ar^2$, $Ar^3$ und $Ar^4$ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und

$Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und vorzugsweise isotrope Lösungen bildendes aromatisches Polyamid ergibt.

14. Zusammensetzungen nach Anspruch 13, dadurch gekennzeichnet, daß $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$-Ar^5-X-Ar^6-$   (IV),

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, $-SO_2-$, -O-Phenylen-O- oder Alkylen ist, und worin
$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

15. Zusammensetzungen nach Anspruch 13, dadurch gekennzeichnet, daß diese aromatische Copolyamide mit den wiederkehrenden Struktureinheiten der Formeln I, II und III enthalten, worin $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, $-CH_2-$ oder -O-1,4-Phenylen-O- ist und $Ar^4$ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

16. Zusammensetzungen nach Anspruch 13, dadurch gekennzeichnet, daß $Ar^1$ und $Ar^2$ 1,4-Phenylen sind, $Ar^5$ und $Ar^6$ 1,4-Phenylen darstellen, X -O-1,4-Phenylen-O- ist und $Ar^4$ einen zweiwertigen Rest des 3,4'-Diaminodiphenylethers, darstellt, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 40-60 Mol%,
wiederkehrende Struktureinheit der Formel II: 1-20 Mol%, und
wiederkehrende Struktureinheit der Formel III: 15-40 Mol%.

17. Zusammensetzungen nach Anspruch 13, dadurch gekennzeichnet, daß $Ar^1$ und $Ar^2$ 1,4-Phenylen sind, $Ar^5$ und $Ar^6$ 1,4-Phenylen darstellen, X -O-1,4-Phenylen-O- ist und $Ar^4$ einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 10-30 Mol%,
wiederkehrende Struktureinheit der Formel II: 10-30 Mol%, und
wiederkehrende Struktureinheit der Formel III: 30-70 Mol%.

18. Zusammensetzungen nach Anspruch 13, dadurch gekennzeichnet, daß diese aromatische Copolyamide mit den wiederkehrenden Struktureinheiten der Formeln I, II und III enthalten, worin $Ar^1$ und $Ar^2$ 1,4-Phenylen sind, $Ar^3$ einen zweiwertigen Rest des 3,4'-Diaminodiphenylethers darstellt, und $Ar^4$ einen zweiwertigen Rest des 3,3'-Dichlorbenzidins, 3,3'-Dimethylbenzidins oder des 3,3'-Dimethoxybenzidins bedeutet, worin die Mengenanteile der wiederkehrenden Struktureinheiten der Formeln I bis III sich innerhalb folgender Bereiche, bezogen auf die Gesamtmenge dieser Struktureinheiten, bewegen:
wiederkehrende Struktureinheit der Formel I: 10-40 Mol%,
wiederkehrende Struktureinheit der Formel II: 10-40 Mol%, und
wiederkehrende Struktureinheit der Formel III: 20-70 Mol%.

19. Zusammensetzungen nach Anspruch 13, dadurch gekennzeichnet, daß diese aromatische Copolyamide mit den wiederkehrenden Struktureinheiten der Formeln I und II enthalten, worin $Ar^1$ 1,4-Phenylen ist,

$Ar^2$ 1,4-Phenylen oder ein zweiwertiger Rest des 4,4'-Diaminobenzanilids ist, und $Ar^3$ einen zweiwertigen Rest des 3,4'-Diaminodiphenylethers bedeuten, worin die Mengenanteile der wiederkehrenden Struktureinheiten der Formeln I und II sich innerhalb folgender Bereiche, bezogen auf die Gesamtmenge dieser Struktureinheiten bewegen:

wiederkehrende Struktureinheit der Formel I: 20-60 Mol%, und

wiederkehrende Struktureinheit der Formel II: 40-60 Mol%.

20. Zusammensetzungen nach Anspruch 13, dadurch gekennzeichnet, daß die Fullerene aus $C_{60}$ bis $C_{70}$ Fraktionen bestehen.

21. Geformte Gebilde, insbesondere Fasern oder Filme aus den Zusammensetzungen nach Anspruch 13.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-5 296 543 (R.V. KASOWSKI ET AL) * das ganze Dokument * --- | 1-21 | C08K3/04 C08K5/01 |
| X | US-A-5 276 085 (R.V. KOWALSKI ET AL) * das ganze Dokument * ----- | 1-21 | |

**RECHERCHIERTE SACHGEBIETE (Int.Cl.6)**

C08K
C08G

Der vorliegende Recherchenbericht wurde für alle Patentansprüche erstellt

| Recherchenort | Abschlußdatum der Recherche | Prüfer |
|---|---|---|
| DEN HAAG | 22. August 1995 | Leroy, A |